# EUROPEAN PATENT APPLICATION

(11) **EP 4 749 765 A1**
(43) Date of publication of application: **27.05.2026**
(21) Application number: 24857689.4
(22) Date of filing: 07.03.2024
(51) Int. Cl.: H01M 10/613

(54) **ENERGY STORAGE DEVICE, OPTICAL STORAGE SYSTEM, AND CHARGING NETWORK**

(30) Priority: 25.08.2023 CN 202311094489
(71) Applicant: Huawei Digital Power Technologies Co., Ltd., Shenzhen, Guangdong 518043 (CN)
(72) Inventor: LIU, Huan, Shenzhen, Guangdong 518043 (CN); LI, Quanming, Shenzhen, Guangdong 518043 (CN); LI, Malin, Shenzhen, Guangdong 518043 (CN)
(74) Representative: Maiwald GmbH
(86) International application number: PCT/CN2024/080598
(87) International publication number: WO 2025/044136

(57) **Abstract**

This application provides an energy storage device, a photovoltaic energy storage system, and a charging network, and relates to the field of energy technologies, to resolve a technical problem of poor applicability of the energy storage device. The energy storage device provided in this application includes a thermal management module, a battery module, a heat dissipation module, and a compressor that are separately integrated. The thermal management module includes a first heat exchanger, a first throttle valve, and a multi-way valve, and a housing of the thermal management module has an interface connected to another module. The multi-way valve in the thermal management module can switch on/off states of different interfaces to change a flow path of a coolant. In the energy storage device provided in this application, operation in a plurality of different modes may be implemented. During deployment, different modules may be connected to form an efficient coolant system, achieving good deployment flexibility and installation convenience. Subsequently, a module that needs to be updated or iterated may be simply replaced, achieving good convenience.

## Description

### CROSS-REFERENCE TO RELATED APPLICATIONS

This application claims priority to Chinese Patent Application No. 202311094489.9, filed with the China National Intellectual Property Administration on August 25, 2023 and entitled "ENERGY STORAGE DEVICE, PHOTOVOLTAIC ENERGY STORAGE SYSTEM, AND CHARGING NETWORK", which is incorporated herein by reference in its entirety.

### TECHNICAL FIELD

This application relates to the field of energy technologies, and in particular, to an energy storage device, a photovoltaic energy storage system, and a charging network.

### BACKGROUND

With continuous development and wide application of clean energy, an energy storage device that can store electric energy starts to be widely used in a plurality of fields. Currently, there are increasingly more large-scale cabinet-level or container-level energy storage devices to accommodate more batteries, to improve electric energy storage capabilities of the energy storage devices.

A plurality of batteries in the energy storage device are connected in series and parallel, and are disposed in a box of the energy storage device, so that the box effectively protects the batteries. During actual use, it needs to be ensured that the battery is in a normal temperature range, to ensure charging and discharging performance and use safety of the battery. In view of this, a heat dissipation system is usually disposed for the battery in the energy storage device, to regulate and control a temperature of the battery. However, a heat dissipation system using a conventional air cooling manner has low efficiency, and cannot meet a requirement of a current energy storage device for efficiency in regulating and controlling a temperature of a battery.

### SUMMARY

This application provides an energy storage device capable of efficiently regulating and controlling a temperature of a battery, a photovoltaic energy storage system, and a charging network.

According to a first aspect, this application provides an energy storage device, which may include a thermal management module, a battery module, a heat dissipation module, and a compressor. The thermal management module includes a housing, and a first heat exchanger, a first throttle valve, and a multi-way valve that are disposed in the housing. The housing of the thermal management module has a first interface and a second interface. The first heat exchanger and the first throttle valve are sequentially connected between the first interface and the second interface. The compressor and the heat dissipation module are sequentially connected between the first interface and the second interface. That is, the first heat exchanger, the first throttle valve, the heat dissipation module, and the compressor are sequentially connected to jointly form a refrigerant circulation loop, so that heat exchange between the first heat exchanger and the heat dissipation module can be implemented. The housing of the thermal management module further has a third interface and two fourth interfaces, the first heat exchanger is connected between the third interface and the multi-way valve, and the multi-way valve is further connected to the two fourth interfaces. The first heat exchanger is configured to implement heat exchange between a refrigerant loop and a coolant loop. The multi-way valve is configured to connect or disconnect a path between the first heat exchanger and any one of the fourth interfaces. The multi-way valve is further connected between the two fourth interfaces, and is configured to connect or disconnect a path between the two fourth interfaces. The battery module is connected between the third interface and one of the fourth interfaces, and the heat dissipation module is connected between the third interface and the other of the fourth interfaces. When a coolant loop is formed between the battery module and the first heat exchanger by using the multi-way valve, heat exchange between the battery module and the heat dissipation module may be implemented. When a coolant loop is formed between the heat dissipation module and the first heat exchanger by using the multi-way valve, heat exchange between the heat dissipation module and the heat dissipation module may be implemented.

In the energy storage device provided in this application, the thermal management module, the battery module, the heat dissipation module, and the compressor are separately of an integrated structure, and each module has an external interface connected to another module. During deployment, different modules may be connected according to an actual requirement to form an efficient coolant system, achieving good deployment flexibility and installation convenience. In addition, in a long-term evolution process, a module that needs to be updated or iterated may be easily replaced, achieving good convenience. When some modules are updated or iterated, other modules may retain existing states, achieving good evolution and compatibility.

In an example, the energy storage device further includes a reversing module. A housing of the reversing module has a first reversing interface, a second reversing interface, a third reversing interface, and a fourth reversing interface. The reversing module includes a reversing valve connected to the first reversing interface, the second reversing interface, the third reversing interface, and the fourth reversing interface, and the reversing valve is configured to switch a flow direction of a refrigerant between the third reversing interface and the fourth reversing interface. The first reversing interface and the second reversing interface are respectively connected to two ends of the compressor, the third reversing interface is connected to the first interface of the thermal management module, and the fourth reversing interface is connected to the heat dissipation module. The reversing valve is configured to switch the flow direction of the refrigerant between the third reversing interface and the fourth reversing interface, so that the heat dissipation module can cool or heat the first heat exchanger by using the refrigerant.

In an example, the thermal management module further includes a dehumidification module, and the dehumidification module includes a second heat exchanger and a second throttle valve. The second heat exchanger and the second throttle valve are sequentially connected between the first interface and the second interface. In a process in which a refrigerant circulates in a circulation loop formed by the compressor, the second heat exchanger, the second throttle valve, and the heat dissipation module, a temperature of the second heat exchanger is low. When humidity in a cabinet of the energy storage device is high and the temperature of the second heat exchanger is lower than a dew point temperature of air, water vapor in the cabinet is condensed into water droplets, and the water droplets are discharged through a drainpipe, to reduce the humidity in the energy storage device.

During specific disposing, both the thermal management module and the battery module are located in the cabinet, and the heat dissipation module is located outside the cabinet. The cabinet can effectively protect the thermal management module and the battery module. The cabinet can protect the battery module and the thermal management module from being affected by sunlight, rain, and the like, thereby improving safety and service lives of the battery module and the thermal management module. The heat dissipation module is located outside the cabinet to facilitate effective heat exchange with an external environment.

In an example, the reversing module further includes a bypass valve, and the bypass valve and the compressor are connected in parallel. When the bypass valve is turned on, pressure of the compressor can be reduced, thereby effectively protecting the compressor.

In an example, the thermal management module further includes a water pump, and the water pump is connected between the third interface and a plurality of fourth interfaces, and is configured to implement effective circulation of a coolant in a coolant loop.

In an example, the thermal management module further includes an electric heater, and the electric heater is connected between the multi-way valve and the fourth interface. The electric heater can better heat a coolant flowing through the battery module to effectively increase a temperature of the battery module.

In an example, the battery module includes a first cooling plate and a battery, and the battery is in thermal contact with the first cooling plate.

In an example, the energy storage device further includes a second cooling plate and a power conversion system, and the power conversion system is in thermal contact with the second cooling plate. The first cooling plate and the second cooling plate are connected in series.

In an example, the heat dissipation module includes a refrigerant radiator and a coolant radiator. The refrigerant radiator is connected between the compressor and the second interface, and the coolant radiator is connected between the third interface and the fourth interface.

In an example, the refrigerant radiator has a first air flow channel, the coolant radiator has a second air flow channel, and the first air flow channel communicates with the second air flow channel. The first air flow channel communicates with the second air flow channel, so that external air can flow through the first air flow channel and the second air flow channel in sequence, thereby implementing integrated disposing of an air flow channel, and helping simplify a structure of the air flow channel.

In an example, the heat dissipation module further includes a fan, and the fan is disposed on a side of the first air flow channel or the second air flow channel, and is configured to allow air to circulate between the first air flow channel, the second air flow channel, and the external environment.

According to a second aspect, this application further provides a photovoltaic energy storage system, which may include a power generation device, a power conversion device, and the energy storage device. The power conversion device is connected between the power generation device and the energy storage device. The power generation device is configured to store generated electric energy into a battery of the energy storage device via the power conversion device. The used energy storage device can effectively improve heat dissipation performance of the photovoltaic energy storage system, and has advantages of high reliability and a long service life.

According to a third aspect, this application further provides a charging network, which may include a charging pile and the energy storage device. The charging pile is electrically connected to the energy storage device, and the energy storage device is configured to supply electric energy to the charging pile. The used energy storage device can effectively improve heat dissipation performance of the charging network, and has advantages of high reliability and a long service life.

### BRIEF DESCRIPTION OF DRAWINGS

FIG. 1 is a simple diagram of a structure of an energy storage device according to an embodiment of this application;
FIG. 2 is a diagram of a structure of an energy storage device according to an embodiment of this application;
FIG. 3 is a diagram of a structure of another energy storage device according to an embodiment of this application;
FIG. 4 is a diagram of a structure of another energy storage device according to an embodiment of this application;
FIG. 5 is a diagram of a structure of another energy storage device according to an embodiment of this application;
FIG. 6 is a diagram of a structure of another energy storage device according to an embodiment of this application;
FIG. 7 is a diagram of a structure of another energy storage device according to an embodiment of this application;
FIG. 8 is a diagram of a structure of another energy storage device according to an embodiment of this application;
FIG. 9 is a diagram of an operating mode of the energy storage device shown in FIG. 8;
FIG. 10 is a diagram of another operating mode of the energy storage device shown in FIG. 8;
FIG. 11 is a diagram of another operating mode of the energy storage device shown in FIG. 8;
FIG. 12 is a diagram of another operating mode of the energy storage device shown in FIG. 8;
FIG. 13 is a diagram of a structure of a photovoltaic energy storage system according to an embodiment of this application; and
FIG. 14 is a diagram of a structure of a charging network according to an embodiment of this application.

### DESCRIPTION OF EMBODIMENTS

To make objectives, technical solutions, and advantages of this application clearer, the following further describes this application in detail with reference to the accompanying drawings.

To facilitate understanding of an energy storage device provided in embodiments of this application, the following first describes application scenarios of the energy storage device.

The energy storage device provided in embodiments of this application may be used in but is not limited to five types of industrial and commercial energy storage scenarios such as a small industrial and commercial industry (for example, a small factory), a medium industrial and commercial industry, a large industrial and commercial industry, a station of integration of photovoltaic, energy storage, and charging, and a small or medium microgrid (for example, an island), and three types of power station scenarios such as a wind/solar energy storage power station, a grid energy storage power station, and a large microgrid, to store and release electric energy.

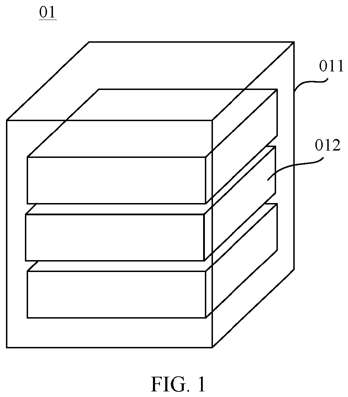

As shown in FIG. 1, an energy storage device 01 may include a box 011 and a plurality of batteries 012 disposed in the box 011. The box 011 can provide enough accommodation space for the battery 012, and can protect the battery 012 from being affected by sunlight, rain, and the like, thereby improving safety and a service life of the battery 012. In addition, after the battery 012 is disposed in the box 011, it is conducive to further improving convenience during deployment. During actual application, the box 011 may be disposed at a required mounting position according to an actual deployment requirement.

In charging and discharging processes of the battery 012, a large amount of heat is generated. Therefore, the battery 012 needs to be cooled. Currently, the battery 012 is cooled mainly in two manners: air cooling and liquid cooling. In the air cooling manner, heat on a surface of the battery 012 is dissipated mainly through flowing of air, which has a disadvantage of low heat dissipation efficiency. In addition, dust in the air continuously accumulates on the surface of the battery 012, and corrodes the battery 012, which is not conducive to reliability and a service life of the battery 012. In the liquid cooling manner, heat of the battery 012 is mainly dissipated through a medium (for example, water) flowing in a cooling pipeline, which features high heat dissipation efficiency. Therefore, increasingly more manufacturers start to dissipate heat from the battery 012 in the liquid cooling manner.

However, in the current energy storage device 01, a liquid cooling system usually includes a plurality of components such as a compressor, a multi-way valve, a plurality of different types of heat exchangers, and related pipelines. During actual deployment, different components need to be assembled and connected on site. This increases difficulty in transportation and installation, and is not conducive to actual application. In addition, different users have different requirements for liquid cooling systems, and consequently architectures of the liquid cooling systems are obviously different. This is not conducive to wide application. In addition, during actual application, the components can meet current actual requirements. However, with continuous development of technologies and continuous improvement of user requirements, some components may need to be updated or iterated. However, different components are assembled and connected according to current requirements. Therefore, during update or iteration, there is significant difficulty in both dismantling and installing, which is not conducive to long-term evolution of the energy storage device.

In view of this, an embodiment of this application provides an energy storage device that is conducive to long-term evolution and can achieve good temperature regulation and control performance in a plurality of working conditions.

To make objectives, technical solutions, and advantages of this application clearer, the following further describes this application in detail with reference to the accompanying drawings and specific embodiments.

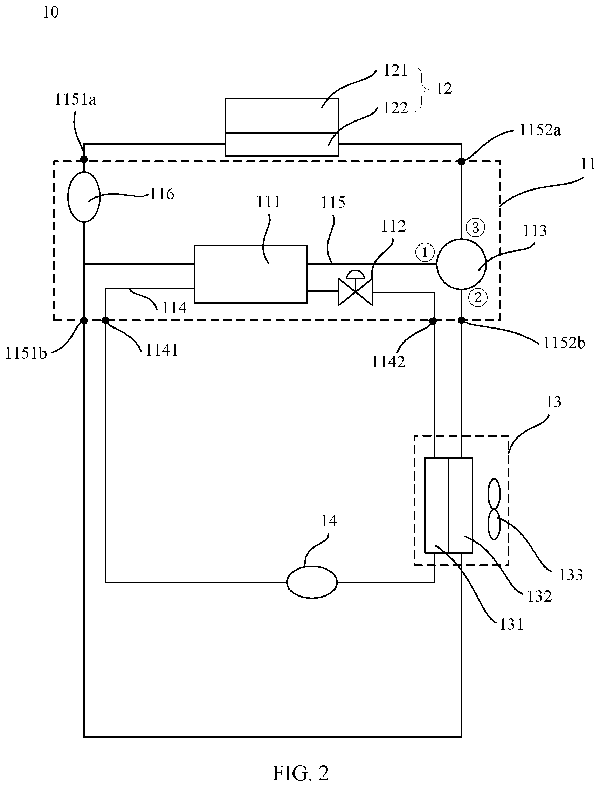

As shown in FIG. 2, in an example provided in this application, an energy storage device 10 includes a thermal management module 11, a battery module 12, a heat dissipation module 13, and a compressor 14. The thermal management module 11, the battery module 12, the heat dissipation module 13, and the compressor 14 are separately of an integrated structure, and each module has an external interface connected to another module. During deployment, different modules may be connected according to an actual requirement to form an efficient coolant system, achieving good deployment flexibility and installation convenience. In addition, in a long-term evolution process, a module that needs to be updated or iterated may be easily replaced, achieving good convenience. When some modules are updated or iterated, other modules may retain existing states, achieving good evolution and compatibility.

As shown in FIG. 2, the thermal management module 11 includes a first heat exchanger 111, a first throttle valve 112, a multi-way valve 113, a refrigerant pipeline 114, and a coolant pipeline 115. A housing of the thermal management module 11 has a first interface 1141 and a second interface 1142 that communicate with the refrigerant pipeline 114. Communication between the thermal management module 11 and the external refrigerant pipeline 114 may be implemented through the first interface 1141 and the second interface 1142. The first heat exchanger 111 and the first throttle valve 112 are sequentially connected to the refrigerant pipeline 114 in a direction from the first interface 1141 to the second interface 1142, and the compressor 14 and the heat dissipation module 13 are sequentially connected between the first interface 1141 and the second interface 1142. That is, the first heat exchanger 111, the first throttle valve 112, the heat dissipation module 13, and the compressor 14 are sequentially connected to jointly form a refrigerant circulation loop, so that heat exchange between the first heat exchanger 111 and the heat dissipation module 13 can be implemented.

In addition, the housing of the thermal management module 11 further has both a third interface and two fourth interfaces that all communicate with the coolant pipeline 115. During actual application, the third interface needs to be connected to two external pipelines at the same time. Therefore, in the example provided in this application, there are two third interfaces: a third interface 1151a and a third interface 1151b. There are two fourth interfaces: a fourth interface 1152a and a fourth interface 1152b. The first heat exchanger 111 is connected between the third interfaces 1151a and 1151b and the fourth interfaces 1152a and 1152b. The multi-way valve 113 is connected between the first heat exchanger 111 and the fourth interfaces 1152a and 1152b, and the multi-way valve 113 is configured to connect or disconnect a path between the third interfaces 1151a and 1151b and the fourth interface 1152a, and a path between the third interfaces 1151a and 1151b and the fourth interface 1152b. In addition, the multi-way valve 113 is further connected between the fourth interface 1152a and the fourth interface 1152b, and is configured to connect or disconnect a path between the fourth interface 1152a and the fourth interface 1152b.

The battery module 12 is connected between the third interface 1151a and the fourth interface 1152a. When the multi-way valve 113 enables the third interface 1151a and the fourth interface 1152a to be in a communicated state, a coolant loop can be formed between the battery module 12 and the first heat exchanger 111, thereby implementing heat exchange between the battery module 12 and the heat dissipation module 13.

The heat dissipation module 13 is connected between the third interface 1151b and the fourth interface 1152b. When the multi-way valve 113 enables the third interface 1151b and the fourth interface 1152b to be in a communicated state, a coolant loop can be formed between the heat dissipation module 13 and the first heat exchanger 111, thereby implementing heat exchange between the heat dissipation module 13 and the heat dissipation module 13.

In addition, when the multi-way valve 113 enables the fourth interface 1152a and the fourth interface 1152b to be in a communicated state, a coolant loop can be formed between the battery module 12 and the heat dissipation module 13, thereby implementing heat exchange between the battery module 12 and the heat dissipation module 13.

In the energy storage device 10 provided in this application, each module has an independent function, and each module has an interface connected to another module. During actual deployment, a type and a quantity of modules may be properly selected according to different requirements.

For example, in an example provided in this application, a main function of the thermal management module 11 is to establish heat exchange between a refrigerant flow path and a coolant flow path, and connect to a plurality of external modules. The thermal management module 11 can further flexibly adjust a communication status between different modules, thereby implementing a plurality of different thermal management modes.

Specifically, the thermal management module 11 has the refrigerant pipeline 114 and the coolant pipeline 115. The refrigerant pipeline 114 may be connected to the compressor 14 and the heat dissipation module 13 through the first interface 1141 and the second interface 1142 to form a refrigerant loop. In addition, the coolant pipeline 115 is connected to the battery module 12 and the heat dissipation module 13 through the third interfaces 1151a and 1151b, the fourth interface 1152a, and the fourth interface 1152b to form a coolant loop.

The first heat exchanger 111 in the thermal management module 11 is connected to the refrigerant pipeline 114 and the coolant pipeline 115, and the first heat exchanger 111 is configured to implement heat exchange between the refrigerant pipeline 114 and the coolant pipeline 115.

A refrigerant may be but is not limited to freon, a liquid ammonia compound, or the like, and a coolant may be but is not limited to water, ethylene glycol, or the like. During specific application, specific types of the refrigerant and the coolant may be properly selected according to an actual requirement. This is not limited in this application.

During specific disposing, specific composition of the thermal management module 11 may be diversified.

For example, as shown in FIG. 2, in an example provided in this application, the thermal management module 11 specifically includes the first heat exchanger 111, the first throttle valve 112, the multi-way valve 113, the refrigerant pipeline 114, the coolant pipeline 115, and a water pump 116. The first heat exchanger 111 has a refrigerant flow channel (not shown in FIG. 2) and a coolant flow channel (not shown in FIG. 2) that are independent of each other. The refrigerant flow channel in the first heat exchanger 111 is connected to the refrigerant pipeline 114. The coolant flow channel in the first heat exchanger 111 is connected to the coolant pipeline 115. The refrigerant and the coolant may exchange heat in the first heat exchanger 111, thereby implementing heat exchange between the refrigerant pipeline 114 and the coolant pipeline 115. The water pump 116 is connected to the coolant pipeline 115, and is configured to implement effective circulation of a coolant in the coolant pipeline 115.

In an example provided in this application, the thermal management module 11 has the two fourth interfaces: the fourth interface 1152a and the fourth interface 1152b. Therefore, during actual application, the multi-way valve 113 may be specifically a three-way valve. The three-way valve has three valve ports. One valve port may be connected to one end of the first heat exchanger 111 through a pipeline, and other two ports may be respectively connected to the fourth interface 1152a and the fourth interface 1152b. In another example, the three-way valve may alternatively be replaced with two two-way valves. Details are not described herein.

In addition, in another example, the thermal management module 11 may alternatively include three or more fourth interfaces. During actual application, a disposing quantity of fourth interfaces and a type of the multi-way valve 113 may be properly set according to a specific requirement. It should be noted that, when there is a larger quantity of fourth interfaces, the thermal management module 11 can be connected to more other modules, thereby achieving better scalability. In addition, when there is a large quantity of fourth interfaces, a quantity of equipped valve ports of the multi-way valve 113 also increases. This increases use costs of the multi-way valve 113. Therefore, during actual application, a quantity of fourth interfaces and a type of the multi-way valve 113 may be properly selected according to an actual requirement, to effectively balance applicability and manufacturing costs.

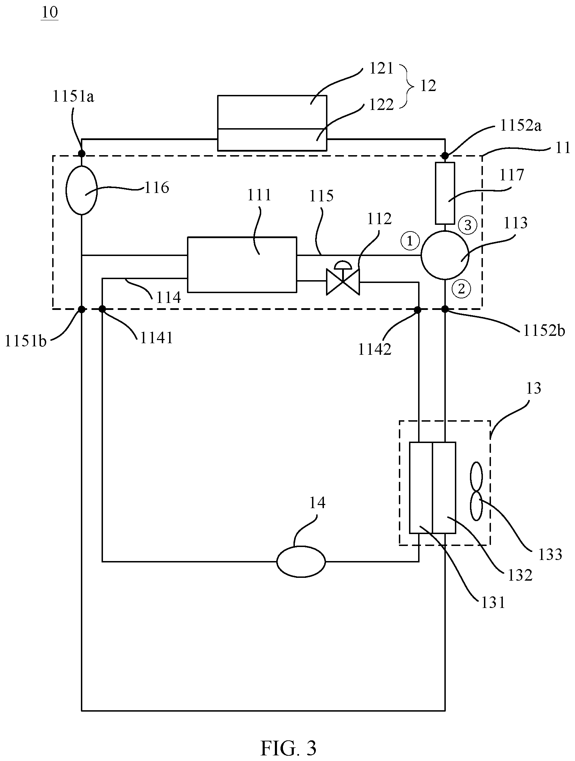

In addition, as shown in FIG. 3, in another example provided in this application, the thermal management module 11 may further include an electric heater 117. The electric heater 117 is connected to the coolant pipeline 115, and may be configured to heat a coolant in the coolant pipeline 115.

During specific disposing, specific connection positions of the electric heater 117 may be diversified.

For example, as shown in FIG. 3, in an example provided in this application, the electric heater 117 is connected between the fourth interface 1152b and the multi-way valve 113, so that a coolant flowing through the battery module 12 can be better heated, to effectively increase a temperature of the battery module 12.

In another example, the electric heater 117 may alternatively be connected at another position. That is, the electric heater 117 can heat the coolant flowing through the battery module 12. Details are not described herein.

It should be noted that, during actual application, the energy storage device 10 may include a cabinet. Both the thermal management module 11 and the battery module 12 are located in the cabinet, and the cabinet can effectively protect the thermal management module 11 and the battery module 12. The cabinet can protect the battery module 12 and the thermal management module 11 from being affected by sunlight, rain, and the like, thereby improving safety and service lives of the battery module 12 and the thermal management module 11. The heat dissipation module 13 is located outside the cabinet to facilitate effective heat exchange with an external environment. In addition, during specific disposing, the compressor 14 may be located inside the cabinet, or may be located outside the cabinet. During actual application, a specific disposing position of the compressor 14 may be properly adjusted. This is not limited in this application.

In addition, during actual application, water vapor in the cabinet is not easy to discharge. After the water vapor exists in the cabinet for a long period of time, related electronic components such as the battery module 12 and the thermal management module 11 located in the cabinet are corroded, and even an unfavorable condition such as a short circuit occurs. This affects safety and a service life of the energy storage device 10.

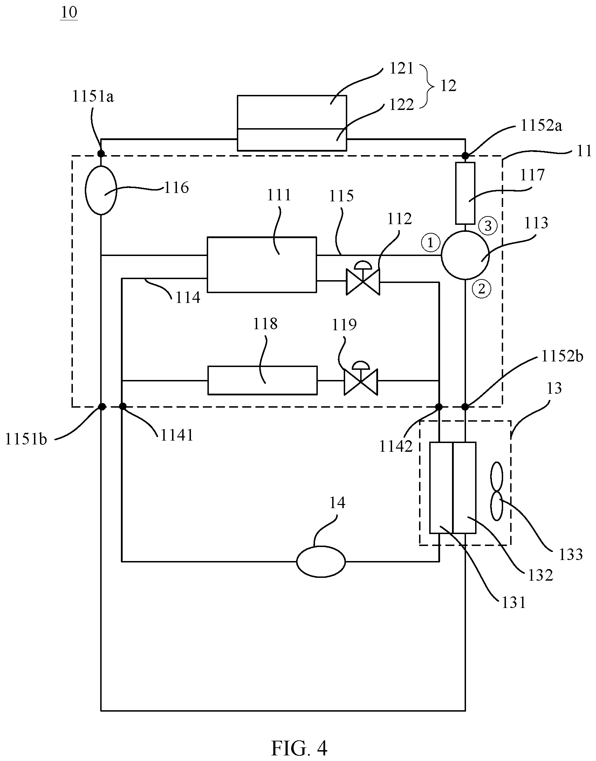

Therefore, as shown in FIG. 4, in an example provided in this application, the thermal management module 11 may further include a dehumidification module, and the dehumidification module includes a second heat exchanger 118 and a second throttle valve 119. The second heat exchanger 118 and the second throttle valve 119 are sequentially connected to the refrigerant pipeline 114 in a direction from the first interface 1141 to the second interface 1142. That is, the second heat exchanger 118, the second throttle valve 119, the heat dissipation module 13, and the compressor 14 are sequentially connected to jointly form a refrigerant circulation loop, so that heat exchange between the second heat exchanger 118 and the heat dissipation module 13 can be implemented.

In a process in which a refrigerant circulates in the circulation loop formed by the compressor 14, the second heat exchanger 118, the second throttle valve 119, and the heat dissipation module 13, a temperature of the second heat exchanger 118 is low. When humidity in the cabinet is high and the temperature of the second heat exchanger 118 is lower than a dew point temperature of air, water vapor in the cabinet is condensed into water droplets, and the water droplets are discharged through a drainpipe, to reduce the humidity in the energy storage device 10.

In addition, because the temperature of the second heat exchanger 118 is low, the second heat exchanger 118 may further reduce a temperature of air in the energy storage device 10, so that the battery module 12 is in a low-temperature environment. In addition, the dehumidification module may further include a fan 133 (not shown in FIG. 4). The fan 133 may be disposed near the second heat exchanger 118, to accelerate a circulation speed of air flowing through the second heat exchanger 118, thereby reducing the temperature of the second heat exchanger 118. This helps improve dehumidification effect of the dehumidification module.

It may be understood that, in the example provided in this application, a combination of the second heat exchanger 118 and the second throttle valve 119 and a combination of the first heat exchanger 111 and the first throttle valve 112 are disposed in parallel, so that the two combinations do not affect each other. Specifically, during dehumidification, the second throttle valve 119 may be turned on and the first throttle valve 112 may be turned off, so that the refrigerant may circulate in the circulation loop formed by the compressor 14, the heat dissipation module 13, the second throttle valve 119, and the second heat exchanger 118, and the second heat exchanger 118 has a low temperature, to implement a dehumidification function. In addition, both the first throttle valve 112 and the second throttle valve 119 may be turned on, that is, the refrigerant may circulate in a circulation loop formed by the compressor 14, the heat dissipation module 13, the first throttle valve 112, and the first heat exchanger 111, and may further circulate in the circulation loop formed by the compressor 14, the heat dissipation module 13, the second throttle valve 119, and the second heat exchanger 118. In this way, both the first heat exchanger 111 and the second heat exchanger 118 have a low temperature, that is, a function of cooling the battery module 12 can be implemented via the first heat exchanger 111, and a dehumidification function can be implemented via the second heat exchanger 118. Certainly, during specific implementation, alternatively, the first throttle valve 112 may be turned on and the second throttle valve 119 may be turned off, so that the refrigerant may circulate in the circulation loop formed by the compressor 14, the heat dissipation module 13, the first throttle valve 112, and the first heat exchanger 111, and the first heat exchanger 111 has a low temperature, to implement the function of cooling the battery module 12.

In summary, the first heat exchanger 111 and the second heat exchanger 118 in the thermal management module 11 are decoupled from each other, so that mutual impact between the first heat exchanger 111 and the second heat exchanger 118 can be avoided. In addition, the combination of the first heat exchanger 111 and the first throttle valve 112 and the combination of the second heat exchanger 118 and the second throttle valve 119 share the same heat dissipation module 13 and the same compressor 14, so that a quantity of used parts and components can be effectively reduced. This helps reduce a size and costs of an adjustment apparatus, and facilitates implementation of an integrated design.

During specific application, specific composition of the battery module 12 may be diversified.

For example, as shown in FIG. 4, in an example provided in this application, the battery module 12 specifically includes a battery 121 and a first cooling plate 122, the battery 121 is in thermal contact with the first cooling plate 122, and the first cooling plate 122 is connected between the third interface 1151a and the fourth interface 1152a.

In an example provided in this application, the battery energy storage device 10 includes one battery module 12. However, during actual application, the energy storage device 10 may alternatively include two or more battery modules 12. When the energy storage device 10 includes two or more battery modules 12, a plurality of first cooling plates 122 may be connected in series between the third interface 1151a and the fourth interface 1152a.

Alternatively, in some examples, the first cooling plate 122 may be replaced with another type of heat exchanger such as an immersion heat exchanger.

Alternatively, in another example, the energy storage device 10 may include another type of module.

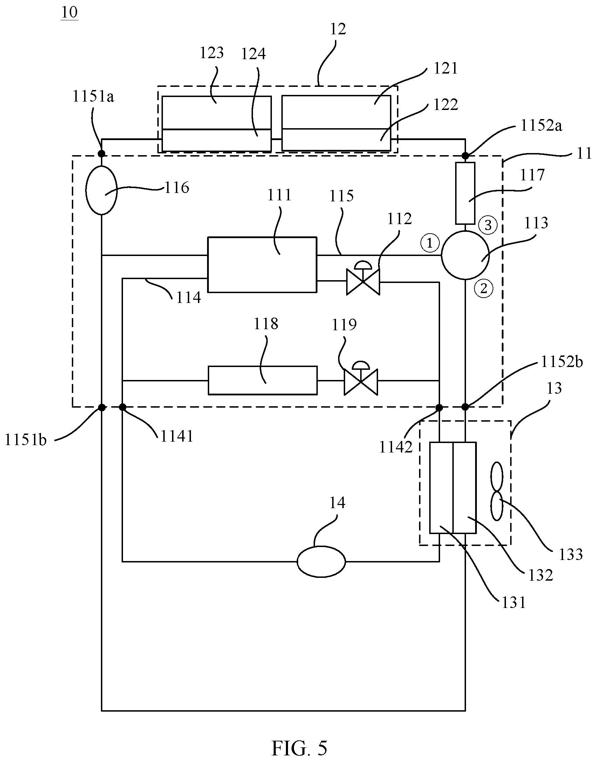

For example, as shown in FIG. 5, in another example provided in this application, the energy storage device 10 further includes a second cooling plate 124 and a power conversion system 123, and the power conversion system 123 is in thermal contact with the second cooling plate 124. The first cooling plate 122 and the second cooling plate 124 are connected in series.

The second cooling plate 124 may also be replaced with another type of heat exchanger such as an immersion heat exchanger. In addition, when both the first cooling plate 122 and the second cooling plate 124 are immersion evaporators, the battery 121 and the power conversion system 123 may also be disposed in an integrated manner. That is, the battery 121 and the power conversion system 123 may be immersed in a same evaporator.

It may be understood that, during specific application, the energy storage device 10 may also integrate a plurality of different types of modules. Alternatively, modules of different types may be integrated separately. Details are not described herein.

During specific application, specific composition of the heat dissipation module 13 may be diversified.

For example, as shown in FIG. 5, in an example provided in this application, the heat dissipation module 13 includes a refrigerant radiator 131 and a coolant radiator 132. The refrigerant radiator 131 has a refrigerant flow channel (not shown in FIG. 5), and the refrigerant radiator 131 is connected between the compressor 14 and the second interface 1142b. When a refrigerant flows through the refrigerant radiator 131, heat exchange may be performed with the external environment, thereby heating or cooling the refrigerant.

The coolant radiator 132 has a coolant flow channel (not shown in FIG. 5), and the coolant radiator 132 is connected between the third interface 1151b and the fourth interface 1152b. When a coolant flows through the coolant radiator 132, heat exchange may be performed with the external environment, thereby heating or cooling the coolant.

In addition, in the heat dissipation module 13 provided in this application, the refrigerant radiator 131 and the coolant radiator 132 are disposed in an integrated manner, and heat exchange may be implemented between the refrigerant radiator 131 and the coolant radiator 132, so that the refrigerant and the coolant can exchange heat in the heat dissipation module 13, thereby achieving a plurality of different heat exchange modes.

In summary, in the heat dissipation module 13, when the refrigerant flows through the refrigerant radiator 131, heat exchange between the refrigerant and the external environment can be performed. When the coolant flows through the coolant radiator 132, heat exchange between the coolant and the external environment can be performed. In addition, the refrigerant radiator 131 and the coolant radiator 132 are disposed in an integrated manner, and heat exchange between the refrigerant radiator 131 and the coolant radiator 132 can also be performed, so that the refrigerant and the coolant can exchange heat in the heat dissipation module 13.

In addition, in an example provided in this application, the refrigerant radiator 131 has a first air flow channel (not shown in the figure) that communicates with the external environment, the coolant radiator 132 has a second air flow channel (not shown in the figure) that communicates with the external environment, and the first air flow channel communicates with the second air flow channel. In this way, external air can flow through the first air flow channel and the second air flow channel in sequence, thereby implementing integrated disposing of an air flow channel, and helping simplify a structure of the air flow channel.

As shown in FIG. 5, the heat dissipation module 13 further includes the fan 133, and the fan 133 is disposed on a side that is of the coolant radiator 132 and that is away from the refrigerant radiator 131, and is configured to allow air to circulate between the first air flow channel, the second air flow channel, and the external environment.

It may be understood that, in another example, the fan 133 may alternatively be disposed on a side that is of the refrigerant radiator 131 and that is away from the coolant radiator 132. In summary, the fan 133 may be disposed on a side of the first air flow channel of the refrigerant radiator 131, or may be disposed on a side of the second air flow channel of the coolant radiator 132.

During specific disposing, a disposing position of the fan 133 may be properly selected according to an actual requirement. Details are not described herein again.

In addition, in another example, the refrigerant radiator 131 and the coolant radiator 132 may alternatively be independent of each other. That is, the refrigerant radiator 131 and the coolant radiator 132 may be separately disposed. Details are not described herein.

During actual application, the compressor 14 is a one-way component, and cannot be used in reverse. For example, the compressor 14 is configured to allow a refrigerant to circulate in a loop formed by the compressor 14, the first heat exchanger 111, the first throttle valve 112, and the refrigerant radiator 131. However, the refrigerant cannot efficiently circulate in reverse in the loop. Therefore, when the refrigerant circulates, a temperature of the first heat exchanger 111 is always low. That is, the loop formed by the compressor 14, the first heat exchanger 111, the first throttle valve 112, and the refrigerant radiator 131 is a cooling system.

However, in some low-temperature environments, the battery module 12 needs to be heated. Therefore, the temperature of the first heat exchanger 111 needs to be high. That is, the loop formed by the compressor 14, the first heat exchanger 111, the first throttle valve 112, and the refrigerant radiator 131 needs to be switched to a heat pump system.

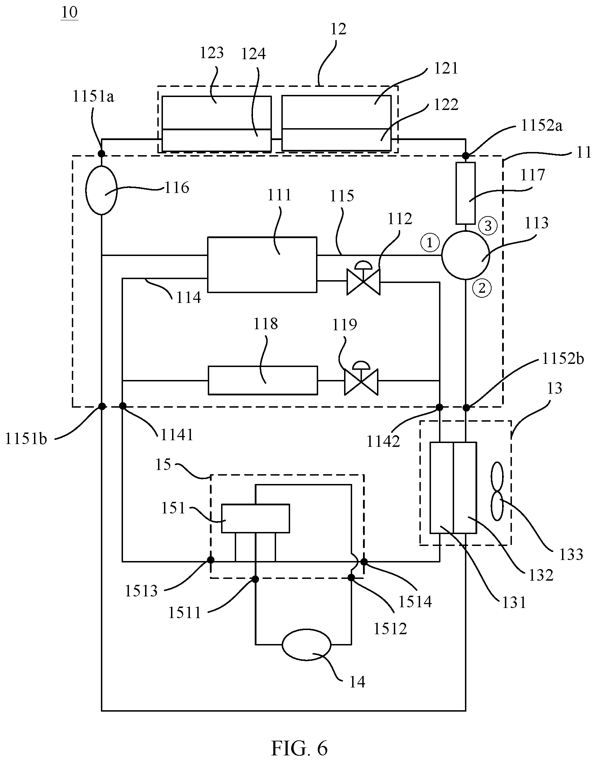

Therefore, as shown in FIG. 6, in an example provided in this application, the energy storage device 10 further includes a reversing module 15. A housing of the reversing module 15 has a first reversing interface 1511, a second reversing interface 1512, a third reversing interface 1513, and a fourth reversing interface 1514. The reversing module 15 includes a reversing valve 151 connected to the first reversing interface 1511, the second reversing interface 1512, the third reversing interface 1513, and the fourth reversing interface 1514. The first reversing interface 1511 and the second reversing interface 1512 are respectively connected to two ends of the compressor 14. The third reversing interface 1513 is connected to the first interface 1141, and the fourth reversing interface 1514 is connected to the heat dissipation module 13. The reversing valve 151 is configured to switch a flow direction of a refrigerant between the third reversing interface 1513 and the fourth reversing interface 1514, so that the refrigerant can be used to cool or heat the first heat exchanger 111.

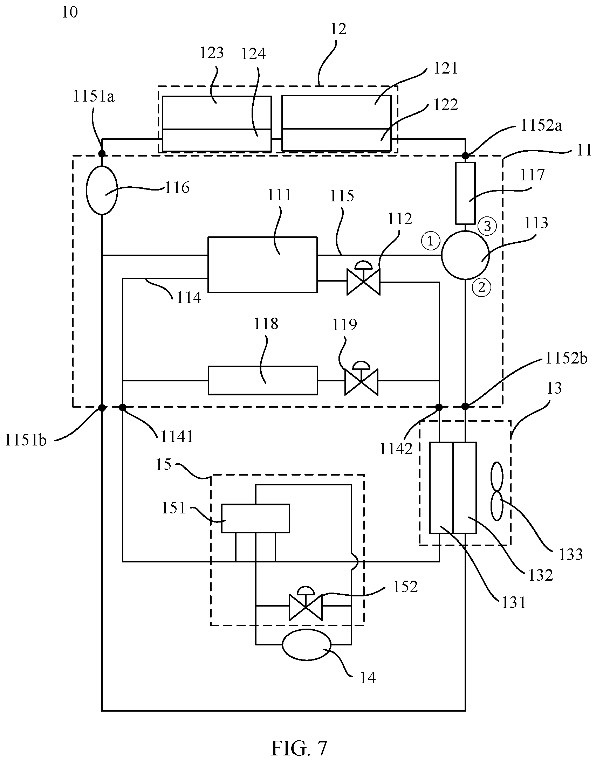

In addition, as shown in FIG. 7, in an example provided in this application, the reversing module 15 further includes a bypass valve 152. The bypass valve 152 and the compressor 14 are connected in parallel, where the bypass valve 152 may be, for example, a solenoid valve. The bypass valve 152 and the compressor 14 are disposed in parallel, where the bypass valve 152 may be, for example, a solenoid valve. In this way, when the compressor 14 works, the bypass valve 152 is turned on to reduce pressure of the compressor 14, thereby protecting the compressor 14. The bypass valve 152 may increase a temperature of the refrigerant at an inlet of the compressor 14. When the loop formed by the compressor 14, the first heat exchanger 111, the first throttle valve 112, and the refrigerant radiator 131 is a heat pump system, after the bypass valve 152 is turned on, the heat pump system may provide more heating capacity and adapt to a lower ambient temperature.

In an actually used thermal management system, a type and a quantity of components included in each module may be properly set according to an actual requirement. In addition, a required type of module may be further selected according to an actual requirement, and a configuration quantity of modules of each type may be adaptively selected according to an actual requirement.

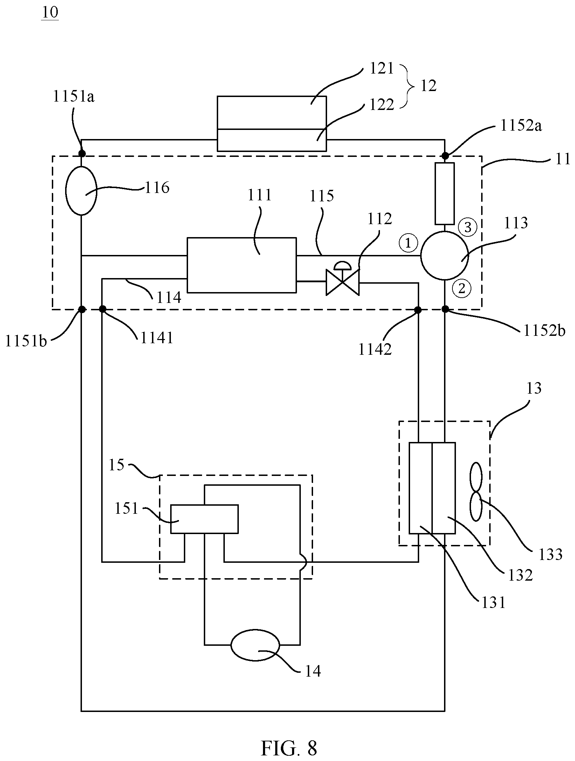

For example, as shown in FIG. 8, in a possible example, the energy storage device 10 includes the thermal management module 11, the battery module 12, the heat dissipation module 13, the reversing module 15, and the compressor 14.

The thermal management module 11 specifically includes the first heat exchanger 111, the first throttle valve 112, the multi-way valve 113, the refrigerant pipeline 114, the coolant pipeline 115, the water pump 116, and the electric heater 117. The first heat exchanger 111 has the refrigerant flow channel and the coolant flow channel that are independent of each other. The refrigerant flow channel in the first heat exchanger 111 is connected to the refrigerant pipeline 114. The coolant flow channel in the first heat exchanger 111 is connected to the coolant pipeline 115. The refrigerant and the coolant may exchange heat in the first heat exchanger 111, thereby implementing heat exchange between the refrigerant pipeline 114 and the coolant pipeline 115. The water pump 116 is connected to the coolant pipeline 115, and is configured to implement effective circulation of a coolant in the coolant pipeline 115. The electric heater 117 is connected between the fourth interface 1152b and the multi-way valve 113, so that the coolant flowing through the battery module 12 can be better heated, to effectively increase the temperature of the battery module 12.

In an example provided in this application, the thermal management module 11 has the two fourth interfaces: the fourth interface 1152a and the fourth interface 1152b. The multi-way valve 113 may be specifically a three-way valve. The three-way valve has three valve ports. One valve port may be connected to one end of the first heat exchanger 111 through a pipeline, and other two ports may be respectively connected to the fourth interface 1152a and the fourth interface 1152b.

The battery module 12 specifically includes the battery 121 and the first cooling plate 122, the battery 121 is in thermal contact with the first cooling plate 122, and the first cooling plate 122 is connected between the third interface 1151a and the fourth interface 1152a.

The heat dissipation module 13 includes the refrigerant radiator 131 and the coolant radiator 132. The refrigerant radiator 131 has the refrigerant flow channel, and the refrigerant radiator 131 is connected between the compressor 14 and the second interface 1142. When the refrigerant flows through the refrigerant radiator 131, heat exchange may be performed with the external environment, thereby heating or cooling the refrigerant. The coolant radiator 132 has the coolant flow channel, and the coolant radiator 132 is connected between the third interface 1151b and the fourth interface 1152b. When the coolant flows through the coolant radiator 132, heat exchange may be performed with the external environment, thereby heating or cooling the coolant.

The housing of the reversing module 15 has the first reversing interface 1511, the second reversing interface 1512, the third reversing interface 1513, and the fourth reversing interface 1514. The reversing module 15 includes the reversing valve 151 connected to the first reversing interface 1511, the second reversing interface 1512, the third reversing interface 1513, and the fourth reversing interface 1514. The first reversing interface 1511 and the second reversing interface 1512 are respectively connected to the two ends of the compressor 14. The third reversing interface 1513 is connected to the first interface 1141, and the fourth reversing interface 1514 is connected to the heat dissipation module 13. The reversing valve 151 is configured to switch the flow direction of the refrigerant between the third reversing interface 1513 and the fourth reversing interface 1514, so that the refrigerant can be used to cool or heat the first heat exchanger 111.

For ease of understanding, the following uses several different operating modes of the energy storage device 10 as an example to describe flow paths and flow directions of the refrigerant and the coolant.

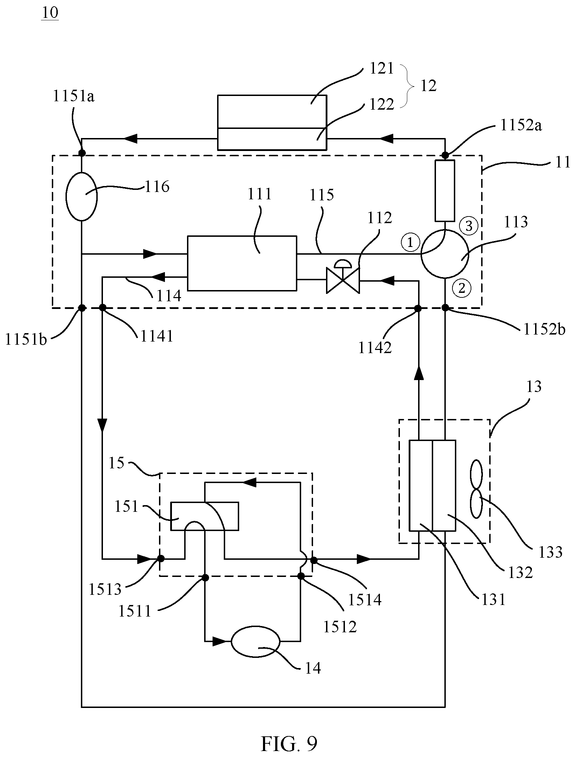

As shown in FIG. 9, when an ambient temperature is high (for example, at a high temperature in summer), a valve port 1 and a valve port 3 of the multi-way valve 113 communicate with each other, and a working mode of the energy storage device 10 is as follows.

Specifically, FIG. 9 shows two circulation loops.

A first circulation loop includes the compressor 14, the refrigerant radiator 131, the first throttle valve 112, and the first heat exchanger 111 that sequentially communicate with each other.

A second circulation loop includes the water pump 116, the first heat exchanger 111, the valve port 1, the valve port 3, and the first cooling plate 122 that sequentially communicate with each other.

In a first circulation path, the refrigerant radiator 131 cools the first heat exchanger 111, so that the first heat exchanger 111 is at a low temperature. A flow path of the refrigerant is the compressor 14, the refrigerant radiator 131, the first throttle valve 112, and the first heat exchanger 111 in sequence.

In a second circulation path, the first cooling plate 122 may be cooled via the first heat exchanger 111. A flow path of the coolant is the water pump 116, the first heat exchanger 111, the interface 1, the interface 3, and the first cooling plate 122 in sequence.

It should be noted that, in the foregoing example, the electric heater 117 is in an off state.

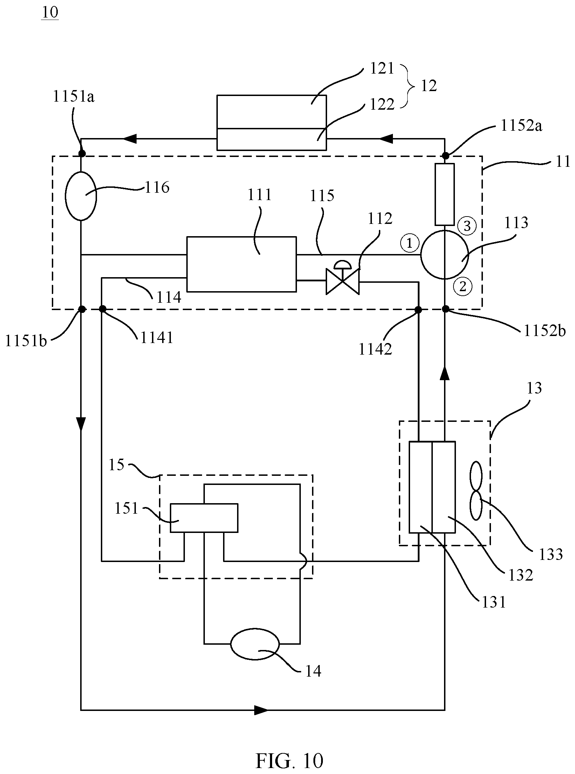

In addition, as shown in FIG. 10, when an ambient temperature is suitable (for example, in spring or autumn), a valve port 2 and a valve port 3 of the multi-way valve 113 communicate with each other, and a working mode of the energy storage device 10 is as follows.

Specifically, FIG. 10 shows one circulation loop.

The circulation loop includes the water pump 116, the coolant radiator 132, the valve port 2, the valve port 3, and the first cooling plate 122 that sequentially communicate with each other.

In the circulation loop, the first cooling plate 122 may be directly cooled via the coolant radiator 132, so that operating power consumption is low, and good heat dissipation effect is achieved. The compressor 14 is in an off state, a corresponding refrigerant loop is in a disconnected state, and the electric heater 117 is also in an off state. This can effectively reduce operating power consumption of the energy storage device 10.

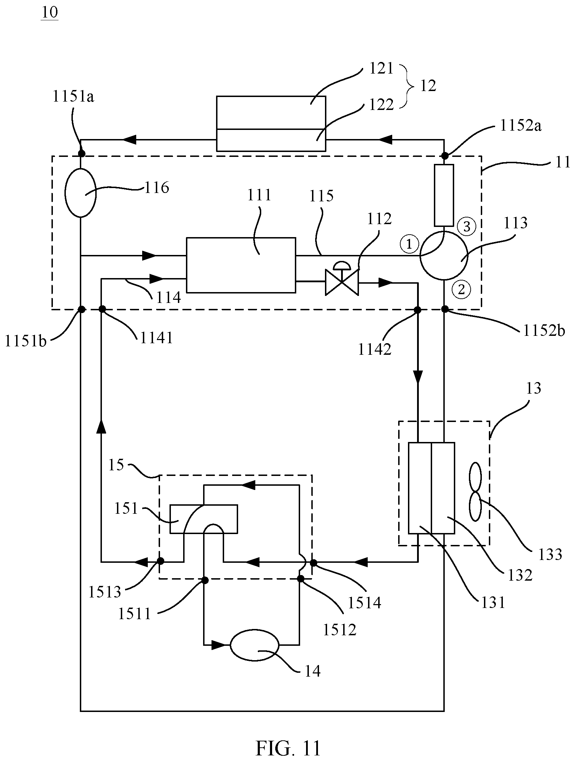

As shown in FIG. 11, when an ambient temperature is low (for example, at a low temperature in winter), a valve port 1 and a valve port 3 of the multi-way valve 113 communicate with each other, and a working mode of the energy storage device 10 is as follows.

Specifically, FIG. 11 shows two circulation loops.

A first circulation loop includes the compressor 14, the first heat exchanger 111, the first throttle valve 112, and the refrigerant radiator 131 that sequentially communicate with each other.

A second circulation loop includes the water pump 116, the first heat exchanger 111, the valve port 1, the valve port 3, and the first cooling plate 122 that sequentially communicate with each other.

In a first circulation path, the refrigerant radiator 131 heats the first heat exchanger 111, so that the first heat exchanger 111 is at a high temperature. A flow path of the refrigerant is the compressor 14, the first heat exchanger 111, the first throttle valve 112, and the refrigerant radiator 131 in sequence.

In a second circulation path, the first cooling plate 122 may be heated via the first heat exchanger 111. A flow path of the coolant is the water pump 116, the first heat exchanger 111, the valve port 1, the valve port 3, and the first cooling plate 122 in sequence.

It should be noted that, in the foregoing example, the electric heater 117 is in an off state.

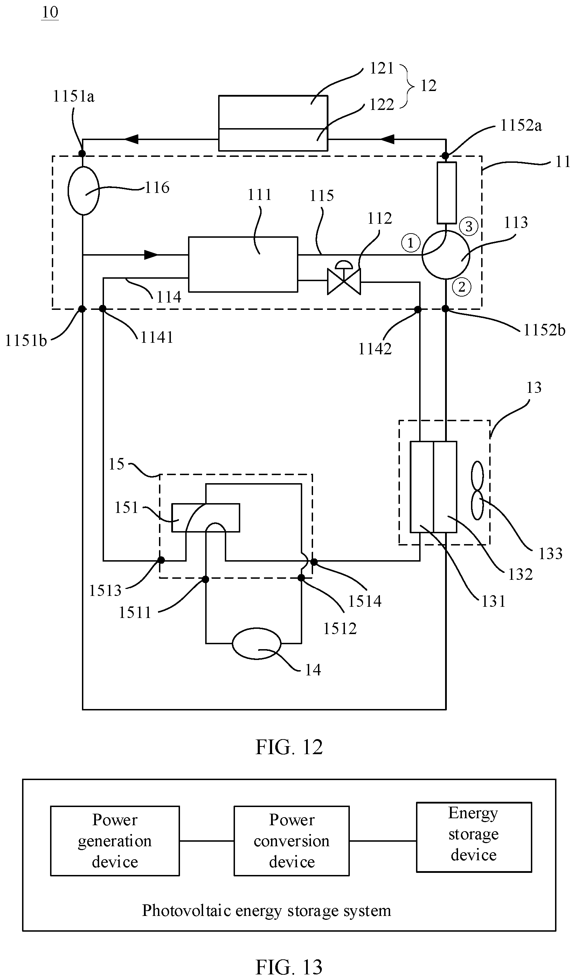

In addition, as shown in FIG. 12, when an ambient temperature is low (for example, at a low temperature in winter), a valve port 1 and a valve port 3 of the multi-way valve 113 communicate with each other, and a working mode of the energy storage device 10 is as follows.

Specifically, FIG. 12 shows one circulation loop.

The circulation loop includes the water pump 116, the coolant radiator 132, the valve port 2, the valve port 3, the electric heater 117, and the first cooling plate 122 that sequentially communicate with each other.

The electric heater 117 is in an on state, and can heat the coolant, and the heated coolant can heat the first cooling plate 122 after flowing through the first cooling plate 122.

In summary, in this working mode, the first cooling plate 122 may be heated only via the electric heater 117.

It may be understood that the several different working modes are merely examples for description. During actual application, different working modes may be selected according to an actual temperature control requirement of the battery module 12 and a temperature of the external environment. Details are not described herein again.

The energy storage device 10 provided in the foregoing embodiments of this application may be used in various energy storage scenarios.

FIG. 13 is a diagram of a structure of a photovoltaic energy storage system according to an embodiment of this application. The photovoltaic energy storage system may include a power generation device, a power conversion device, and the energy storage device 10. The power conversion device is connected between the power generation device and the energy storage device 10. The power generation device is configured to generate electric energy, and the power generation device is configured to store the generated electric energy into a battery of the energy storage device 10 via the power conversion device. The photovoltaic energy storage system uses the energy storage device 10 provided in the foregoing embodiments, so that operating safety of the photovoltaic energy storage system can be effectively improved. During specific implementation, the power generation device may be specifically a solar panel. A specific type of the power generation device is not limited in this application.

In addition, the energy storage device 10 provided in embodiments of this application may be further used in a charging network.

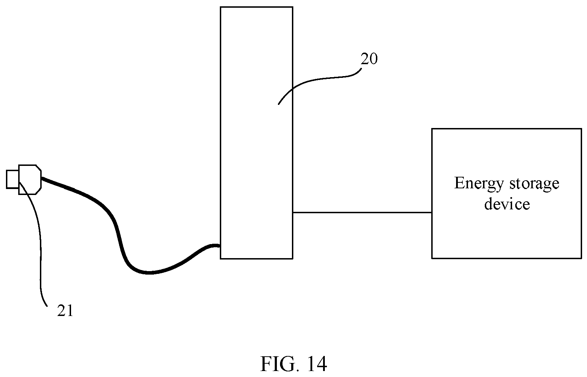

For example, refer to FIG. 14. FIG. 14 is a diagram of a structure of a charging network according to an embodiment of this application. The charging network includes a charging pile 20 and the energy storage device 10. The charging pile 20 is electrically connected to a battery 121 in the energy storage device 10 through a cable, and the battery 121 may supply electric energy stored in the battery 121 to the charging pile 20. The charging pile 20 has a connector 21, and the connector 21 may be connected to a powered device (for example, a vehicle), to supplement energy to the powered device. The charging network uses the energy storage device 10 provided in the foregoing embodiments, so that safety of the charging network can be effectively improved, and flexibility of deploying the charging network can be further improved.

During specific disposing, the charging network may include a plurality of charging piles 20, and each energy storage device 10 may supply electric energy to the plurality of charging piles 20, thereby effectively improving flexibility of deployment.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application means two or more than two. The term "and/or" describes an association relationship between associated objects, and indicates that three relationships may exist. For example, A and/or B may indicate the following cases: Only A exists, both A and B exist, and only B exists, where A and B may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An energy storage device, comprising a thermal management module, a battery module, a heat dissipation module, and a compressor, wherein
the thermal management module comprises a housing, and a first heat exchanger, a first throttle valve, and a multi-way valve that are disposed in the housing;
the housing of the thermal management module comprises a first interface and a second interface, and the first heat exchanger and the first throttle valve are sequentially connected between the first interface and the second interface;
the compressor and the heat dissipation module are sequentially connected between the first interface and the second interface;
the housing of the thermal management module further comprises a third interface and two fourth interfaces, the first heat exchanger is connected between the third interface and the multi-way valve, the multi-way valve is further connected to the two fourth interfaces, and the multi-way valve is configured to: connect or disconnect a path between the first heat exchanger and any one of the fourth interfaces and connect or disconnect a path between the two fourth interfaces; and
the battery module is connected between the third interface and one of the fourth interfaces, and the heat dissipation module is further separately connected to the third interface and the other of the fourth interfaces.

2. The energy storage device according to claim 1, wherein the energy storage device further comprises a reversing module;
a housing of the reversing module has a first reversing interface, a second reversing interface, a third reversing interface, and a fourth reversing interface;
the reversing module comprises a reversing valve connected to the first reversing interface, the second reversing interface, the third reversing interface, and the fourth reversing interface, and the reversing valve is configured to switch a flow direction of a refrigerant between the third reversing interface and the fourth reversing interface;
the first reversing interface and the second reversing interface are respectively configured to connect to two ends of the compressor; and
the third reversing interface is connected to the first interface, and the fourth reversing interface is connected to the heat dissipation module.

3. The energy storage device according to claim 1 or 2, wherein the thermal management module further comprises a dehumidification module, and the dehumidification module comprises a second heat exchanger and a second throttle valve; and
the second heat exchanger and the second throttle valve are sequentially connected between the first interface and the second interface.

4. The energy storage device according to any one of claims 1 to 3, wherein the reversing module further comprises a bypass valve, and the bypass valve and the compressor are connected in parallel.

5. The energy storage device according to any one of claims 1 to 4, wherein the thermal management module further comprises a water pump, and the water pump is connected between the third interface and the first heat exchanger.

6. The energy storage device according to any one of claims 1 to 5, wherein the thermal management module further comprises an electric heater, and the electric heater is connected between the multi-way valve and the fourth interface.

7. The energy storage device according to any one of claims 1 to 6, wherein the battery module comprises a first cooling plate and a battery, and the battery is in thermal contact with the first cooling plate.

8. The energy storage device according to claim 7, wherein the energy storage device further comprises a second cooling plate and a power conversion system, and the power conversion system is in thermal contact with the second cooling plate, wherein
the first cooling plate and the second cooling plate are connected in series.

9. The energy storage device according to any one of claims 1 to 8, wherein the heat dissipation module comprises a refrigerant radiator and a coolant radiator; and
the refrigerant radiator is connected between the compressor and the second interface, and the coolant radiator is connected between the third interface and the fourth interface.

10. The energy storage device according to claim 9, wherein the refrigerant radiator has a first air flow channel, the coolant radiator has a second air flow channel, and the first air flow channel communicates with the second air flow channel.

11. The energy storage device according to claim 10, wherein the heat dissipation module further comprises a fan, and the fan is disposed on a side of the first air flow channel or the second air flow channel, and is configured to allow air to circulate between the first air flow channel, the second air flow channel, and an external environment.

12. The energy storage device according to any one of claims 1 to 11, wherein the energy storage device further comprises a cabinet; and
both the thermal management module and the battery module are located in the cabinet, and the heat dissipation module is located outside the cabinet.

13. A photovoltaic energy storage system, comprising a power generation device, a power conversion device, and the energy storage device according to any one of claims 1 to 12, wherein the power conversion device is connected between the power generation device and the energy storage device, and the power generation device is configured to store generated electric energy into a battery of the energy storage device via the power conversion device.

14. A charging network, comprising a charging pile and the energy storage device according to any one of claims 1 to 12, wherein the charging pile is electrically connected to the energy storage device, and the energy storage device is configured to supply electric energy to the charging pile.
